# EUROPEAN PATENT APPLICATION

(11) **EP 1 939 864 A2**
(43) Date of publication of application: **02.07.2008**
(21) Application number: 07024995.8
(22) Date of filing: 21.12.2007
(51) Int. Cl.: G11B 7/0037, G11B 23/40

(54) **Method for recording on optical recording medium**

(30) Priority: 26.12.2006 JP 2006349891
(71) Applicant: FUJIFILM Corporation, Minato-ku Tokyo 106-8620 (JP)
(72) Inventor: Shibata, Michihiro, Odawara-shi Kanagawa 250-0001 (JP)
(74) Representative: HOFFMANN EITLE

(57) **Abstract**

A method for recording on an optical recording medium (10) having a visible information recording layer (24) comprises irradiating the visible information recording layer (24) with a laser light (38) to change a refractive index of the layer, thereby changing the wavelength of an interfering light to generate an interference color. The refractive index is changed by controlling a stored laser power of the laser light (38). Specifically, the laser light (38) applied to the visible information recording layer (24) is a continuous laser light or a pulsed laser light, and the stored laser power is controlled by changing the laser power of the continuous laser light or the pulse period of the pulsed laser light.

## Description

### BACKGROUND OF THE INVENTION

### Field of the Invention:

The present invention relates to a method for recording on an optical recording medium having a visible information recording layer, on which a visible information can be recorded, and particularly to such a method that comprises irradiating the visible information recording layer with a laser light to change a refractive index of the layer, thereby changing the wavelength of an interfering light to generate an interference color.

### Description of the Related Art:

Write-once optical recording media (optical discs), on which information can be recorded using a laser light only once, have been known. Such optical discs include WORM CDs (CD-Rs) and WORM digital versatile discs (DVD-Rs).

In several known optical discs, music data or the like are recorded on a recording surface, and a label is adhered to the reverse surface. Visible information (image) such as a song title and a data identifier of the recorded music data is printed on the label. Such optical discs are produced by printing a title or the like on a circular label sheet using a printer, and by adhering the label sheet to the reverse surface.

In addition to the above systems with the label sheet adhered, systems of irradiating an optical disc with a laser light to form a label have been studied (see Japanese Laid-Open Patent Publication No. 11-066617, etc.)

Further, methods comprising formation of a dye-containing, visible information recording layer in an optical disc have been proposed (see Japanese Laid-Open Patent Publication Nos. 2000-113516 and 2001-283464, and US. Patent Publication No. 2001/0026531)

Additionally, optical recording media, which have a visible information recording layer mainly composed of a dye, have an absorption maximum within a wavelength range of 450 to 650 nm, and have a laser light absorbance of 0.05 or more within at least one range of wavelength ranges of 350 to 450 nm, 600 to 700 nm, and 750 to 850 nm, have been proposed (see US. Patent Publication No. 2005/0180308, etc.).

However, conventional optical recording media having visible information recording layers are disadvantageous in that visible information recorded on the layers are shown only in mono-color, resulting in poor impact (attraction for customers) on the market, etc.

### SUMMARY OF THE INVENTION

In view of the above problem, an object of the present invention is to provide a method capable of recording a multi-color or full-color visible information on a visible information recording layer of an optical recording medium, thereby increasing the information visibility and customer attraction in the market.

The method of the present invention is for recording on an optical recording medium having a visible information recording layer, and comprises irradiating the visible information recording layer with a laser light to change a refractive index of the layer, thereby changing the wavelength of an interfering light to generate an interference color. The refractive index of the visible information recording layer is changed by controlling a stored laser power of the laser light applied to the layer.

Thus, visible information recorded on the visible information recording layer can be shown in multi-color or full-color, to increase the visibility of the visible information and the customer attraction in the market.

In the present invention, the above laser light may be continuous, and the stored laser power may be controlled by changing the laser power of the continuous laser light.

The above laser light may be pulsed, and the stored laser power may be controlled by changing the pulse period of the pulsed laser light.

The above laser light may be pulsed, and the stored laser power may be controlled by changing the pulse width of the pulsed laser light.

Further, the above laser light may be pulsed, and the stored laser power may be controlled by changing the pulse width and pulse period of the pulsed laser light.

The interference color may be generated such that a reflected light from one interface of the visible information recording layer interferes with a reflected light from the other interface. In this case, the interference color may contain two or more of a reddish color, a greenish color, and a bluish color.

The visible information recording layer preferably contains at least a phthalocyanine dye.

As described above, by using the recording method of the present invention, the visible information recorded on the visible information recording layer can be shown in multi-color or full-color, to increase the visibility of the visible information and the customer attraction in the market.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a cross-sectional view partly showing an optical recording medium for a recording method according to an embodiment of the present invention;
FIG. 2 is a cross-sectional view partly showing a specific structure of the optical recording medium;
FIG. 3 is a plan view showing an optical recording medium of a first modification example according to the embodiment;
FIG. 4 is a plan view showing an optical recording medium of a second modification example according to the embodiment;
FIG. 5 is a cross-sectional view partly showing the optical recording medium of the second modification example;
FIG. 6A is a waveform diagram showing an example of continuous laser light irradiation;
FIG. 6B is a waveform diagram showing an example of pulsed laser light irradiation;
FIG. 6C is a waveform diagram showing another example of pulsed laser light irradiation;
FIG. 6D is a waveform diagram showing another example of continuous laser light irradiation;
FIG. 7 is an explanatory view showing principle of generating an interference light from a visible information recording layer using a white light;
FIG. 8A is an explanatory view showing the refractive index change from n to n1 by irradiating a first area of the visible information recording layer with a pulsed laser light as shown in FIG. 6B;
FIG. 8B is an explanatory view showing the generation of a reddish interference light from the first area having the refractive index n1 changed from n;
FIG. 9A is an explanatory view showing the refractive index change from n to n2 by irradiating a second area of the visible information recording layer with a pulsed laser light as shown in FIG. 6C;
FIG. 9B is an explanatory view showing the generation of a greenish interference light from the second area having the refractive index n2 changed from n;
FIG. 10A is an explanatory view showing the refractive index change from n to n3 by irradiating a third area of the visible information recording layer with a continuous laser light as shown in FIG. 6D;
FIG. 10B is an explanatory view showing the generation of a blue-greenish interference light from the third area having the refractive index n3 changed from n;
FIG. 11 is an explanatory view showing a trajectory pattern of a laser light for forming an image;
FIG. 12 is an enlarged view showing the trajectory pattern in a portion represented by a thick line in FIG. 11;
FIG. 13A is an explanatory view showing the step of irradiating a fourth area of the visible information recording layer with a continuous laser light as shown in FIG. 6A;
FIG. 13B is an explanatory view showing the generation of an interference light from the fourth area; and
FIG. 14 is a table showing the results of obtaining wavelengths of lights from the first to fourth areas after the irradiation with the laser lights by a simulation.

### DESCRIPTION OF THE PREFERRED EMBODIMENTS

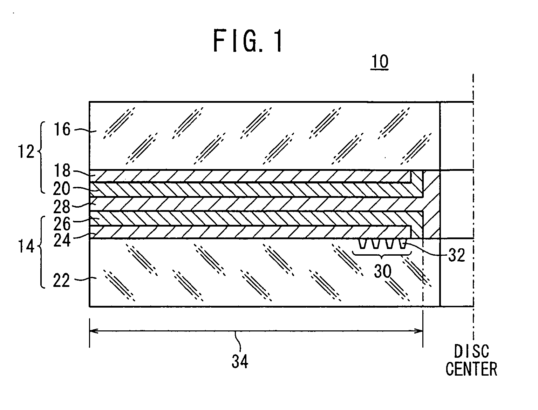

An embodiment of the recording method according to the present invention will be described below with reference to FIGS. 1 to 14.

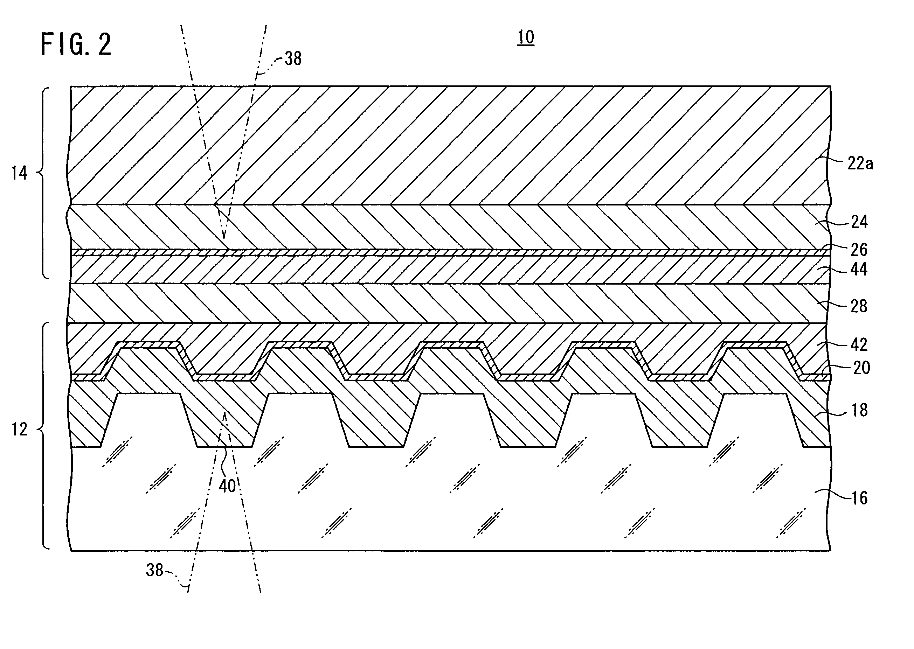

As shown in FIGS. 1 and 2, an optical recording medium 10, to which the recording method of this embodiment can be applied, has a basic structure containing a data recording part 12 and a visible information recording part 14. The data recording part 12 contains a transparent first substrate 16 having pregrooves 40 (see FIG. 2), a data recording layer 18 formed on the pregrooves 40 of the first substrate 16, and a first reflective layer 20 formed on the data recording layer 18. The visible information recording part 14 contains a transparent second substrate 22, a visible information recording layer 24 formed on the second substrate 22, and a second reflective layer 26 formed on the visible information recording layer 24. The data recording part 12 and the visible information recording part 14 are bonded by an adhesion layer 28 such that the first reflective layer 20 faces the second reflective layer 26.

For example, a data (a pit information) can be recorded on the data recording layer 18 by irradiating the layer with a laser light 38 (see FIG. 2) through the first substrate 16.

For example, visible information (an image or a character) can be recorded on the visible information recording layer 24 by irradiating the layer with a laser light 38 through the second substrate 22.

In the optical recording medium 10, there is a pre-pit region 30 on a surface of the second substrate 22 (a surface facing the visible information recording layer 24). One or more pre-pits 32, preferably a plurality of pre-pits 32, are formed in the pre-pit region 30.

The combination of the pre-pits 32 may provide various information of the optical recording medium 10 such as an information for distinguishing the presence of the visible information recording layer 24, an information of the output (e.g. laser power, wavelength) or spot diameter of the laser light 38 for forming the visible information on the visible information recording layer 24, or an information of the tone of the visible information. Thus, by detecting the pre-pits 32, the presence of the visible information recording layer 24 in the optical recording medium 10 can be easily checked, and the visible information can be recorded on the visible information recording layer 24 under an optimum laser output (optimum laser power or wavelength) with excellent imaging properties. Further, the combination of the pre-pits 32 may provide manufacturer information.

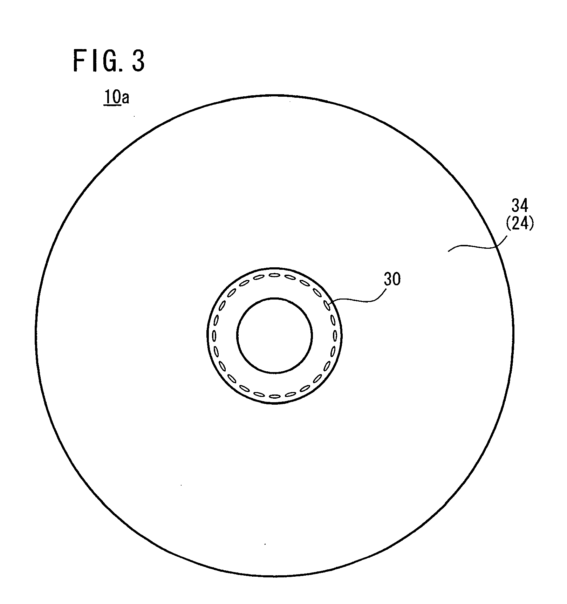

The position of the pre-pit region 30 on the second substrate 22 is not particularly limited. For example, as shown in FIG. 3, the pre-pit region 30 may be formed inside an imaging region 34 having the visible information recording layer 24 in an optical recording medium 10a of a first modification example. In this case, because the pre-pit region 30 is found inside the imaging region 34, the pre-pits 32 are not filled with a dye compound, so that a light returned from the pre-pits 32 is easily detected advantageously. It should be noted that, to prevent the visible information recording layer 24 from being formed in the pre-pit region 30, it is necessary to form a certain margin between the outer circumference of the pre-pit region 30 and the inner circumference of the imaging region 34.

As shown in FIG. 1, the pre-pit region 30 may be partly overlapped with the imaging region 34 to make the imaging region 34 as large as possible. Thus, a portion of the visible information recording layer 24 may be formed on the pre-pits 32. In this case, the position of the visible information recording layer 24 can be relatively freely selected, whereby the yield of the medium can be improved.

In the case of forming the pre-pit region 30 on an inner portion of the second substrate 22 as shown in FIGS. 1 and 2, the pre-pit region 30 is preferably in a region of 21 to 24 mm in the radius direction from the center of the second substrate 22.

The above-mentioned second substrate 22 having the pre-pits 32 may be produced by using a stamper. The stamper has a convexo-concave structure for forming the pre-pits 32. The convex portions of the convexo-concave structure preferably have an average height of 150 to 400 nm. The optical recording medium 10 can be efficiently produced using the stamper.

Common methods of producing stampers for CD-ROMs may be used for producing the above stamper. Specifically, the stamper may be produced by the steps of forming a photoresist film on a glass base plate, subjecting the film to a developing treatment, etc., sputtering a metal such as nickel, and subjecting to an electroforming treatment.

A pregroove region having pregrooves may be used instead of the pre-pit region 30. Alternatively, a burst cutting area (BCA) having a convexo-concave barcode pattern may be used instead of the pre-pit region 30. In this case, the pregrooves or the barcode pattern may provide various information of the optical recording medium 10 such as information for distinguishing the presence of the visible information recording layer 24, information of the output (e.g. laser power) or spot diameter of the laser light for forming the visible information on the visible information recording layer 24, or information of the tone of the visible information.

The structure of the optical recording medium 10 is not particularly limited as long as it contains the visible information recording layer 24 on which the visible information can be formed by the irradiation of the laser light. Thus, the optical recording medium 10 may be a read-only-, WORM-, or rewritable medium, and is preferably a WORM medium. The recording layer of the optical recording medium 10 may be selected from phase change-, magnetic optical-, or dye- recording layer without particular restrictions, and is preferably dye-recording layer.

The optical recording medium 10 shown in FIG. 1 is such that the first substrate 16 having the data recording layer 18 is attached to the second substrate 22 having the visible information recording layer 24. Thus, the optical recording medium 10 is preferably used for DVDs including DVDs, DVD-Rs, DVD-RWs, and HD-DVDs.

Examples of the layer structure of the optical recording medium 10 include the following first to sixth layer structures in addition to the above structure shown in FIG. 1.
(1) The first layer structure is hereinafter described (see FIG. 2), and is such that the data recording layer 18, the first reflective layer 20, and the adhesion layer 28 are formed in this order on the first substrate 16, and the second substrate 22 having the visible information recording layer 24 is attached to the adhesion layer 28.
(2) The second layer structure (not shown) is such that the data recording layer 18, the first reflective layer 20, a protective layer, and the adhesion layer 28 are formed in this order on the first substrate 16, and the second substrate 22 having the visible information recording layer 24 is attached to the adhesion layer 28.
(3) The third layer structure (not shown) is such that the data recording layer 18, the first reflective layer 20, a first protective layer, the adhesion layer 28, and a second protective layer are formed in this order on the first substrate 16, and the second substrate 22 having the visible information recording layer 24 is formed on the second protective layer.
(4) The fourth layer structure (not shown) is such that the data recording layer 18, the first reflective layer 20, a first protective layer, the adhesion layer 28, a second protective layer, and a third protective layer are formed in this order on the first substrate 16, and the second substrate 22 having the visible information recording layer 24 is formed on the third protective layer.
(5) The fifth layer structure is equal to the structure of FIG. 1, and is such that the data recording layer 18, the first reflective layer 20, the adhesion layer 28, and the second reflective layer 26 are formed in this order on the first substrate 16, and the second substrate 22 having the visible information recording layer 24 is formed on the second reflective layer 26.
(6) The sixth layer structure is such that the data recording layer 18, the first reflective layer 20, and a first protective layer are formed in this order on the first substrate 16, the visible information recording layer 24, the second reflective layer 26, and a second protective layer are formed in this order on the second substrate 22, and the first protective layer is attached to the second protective layer by the adhesion layer 28.

The layer structure of FIG. 2 and the first to sixth layer structures are considered in all respects to be illustrative and not restrictive, and the above layers may be formed in another order and the layers other than the visible information recording layer 24 may be removed. Further, each of the layers may have a single- or multi-layer structure.

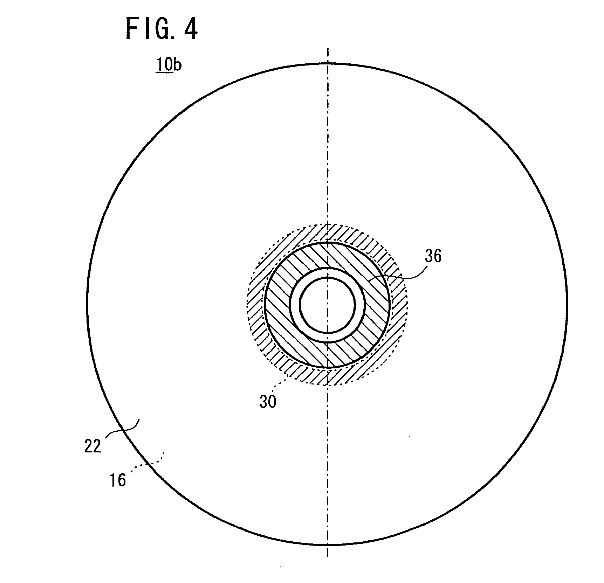

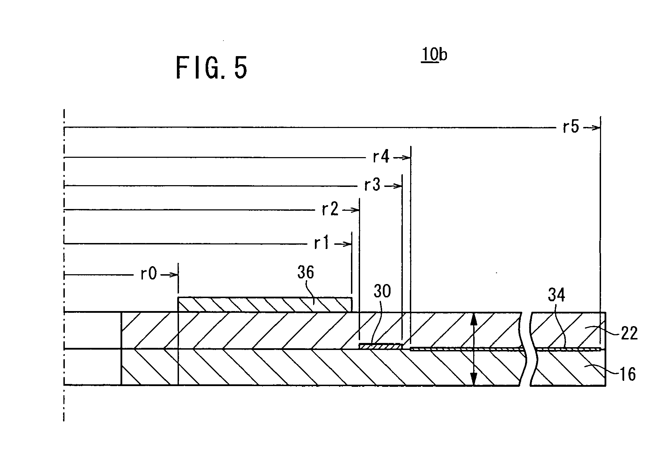

Another modification example of the optical recording medium 10 is shown in FIGS. 4 and 5. In FIG. 5, the data recording layer 18 (see FIG. 1) is omitted.

As shown in FIGS. 4 and 5, an optical recording medium 10b of the second modification example is substantially the same as the optical recording medium 10, but different in a print region 36 formed on an inner portion of the second substrate 22. Further, the pre-pit region 30 is not overlapped with the imaging region 34, and the imaging region 34, the pre-pit region 30, and the print region 36 are arranged in this order from outside to inside the second substrate 22.

For example, a cover sheet printed or stamped with a barcode may be attached to the print region 36. The product name, manufacturer's name, laser power, etc. can be recognized by detecting the print or stamp barcode on the cover sheet. When the print region 36 is formed on the inner circumference of the second substrate 22, the inner circumference of the optical recording medium 10b can be covered to improve the visual effect for the user.

In a case where the optical recording medium 10 is a CD-R, it is preferred that the first substrate 16 has a disc shape having a thickness of 1.2 ± 0.2 mm and the pregrooves 40 with a track pitch of 1.4 to 1.8 µm (see FIG. 2), and the data recording layer 18 containing a dye compound, etc., the first reflective layer 20, a first protective layer (not shown), the adhesion layer 28, a second protective layer (not shown), the second reflective layer 26, the visible information recording layer 24 containing a dye compound, etc., and the second substrate 22 are arranged in this order on the first substrate 16.

In a case where the optical recording medium 10 is a DVD-R, it is preferred that the optical recording medium 10 is such that (1) the first substrate 16 has a disc shape having a thickness of 0.6 ± 0.1 mm and the pregrooves 40 with a track pitch of 0.6 to 0.9 µm, two stacks are each prepared by forming the data recording layer 18 containing a dye compound, etc. and a light reflective layer on the first substrate 16, the data recording layers 18 of the two stacks are bonded to have a thickness of 1.2 ± 0.2 mm, and the visible information recording layer 24 and the second substrate 22 are formed on at least one of the first substrates 16, or (2) the first substrate 16 has a disc shape having a thickness of 0.6 ± 0.1 mm and the pregrooves 40 with a track pitch of 0.6 to 0.9 µm, a stack is prepared by forming the data recording layer 18 containing a dye compound, etc. and a light reflective layer on the first substrate 16, the data recording layer 18 of the stack is bonded to a transparent protective substrate having the same disc shape as the first substrate 16 to have a thickness of 1.2 ± 0.2 mm, and the visible information recording layer 24 and the second substrate 22 are formed on at least one of the substrates. In the DVD-R-type optical recording medium, a protective layer may be formed on the light reflective layer.

The first substrate 16, the second substrate 22, and the layers will be described below.

### [First substrate 16]

The first substrate 16 of the optical recording medium 10 according to this embodiment may comprise a material selected from known materials used in conventional optical recording medium substrates.

Examples of the materials for the first substrate 16 include glasses, polycarbonates, acrylic resins such as polymethyl methacrylates, vinyl chloride resins such as polyvinyl chlorides and vinyl chloride copolymers, epoxy resins, amorphous polyolefins, and polyesters. These materials may be used in combination.

The materials may be used in the state of a film or a rigid substrate as the first substrate 16. Among the materials, the polycarbonates are preferred from the viewpoints of humidity resistance, dimensional stability, and cost.

The thickness of the first substrate 16 is preferably 0.1 to 1.2 mm, more preferably 0.2 to 1.1 mm.

An undercoat layer may be formed on the grooved surface of the first substrate 16, on which the data recording layer 18 is formed, to improve flatness and adhesion and to prevent deterioration of the data recording layer 18.

### [Visible information recording layer 24]

As described above, the optical recording medium 10 has the visible information recording layer 24 in addition to the data recording layer 18. The visible information recording layer 24 may contain a dye compound as a main component, and is preferably formed on the side opposite to the data recording layer 18 side. The term "the visible information recording layer 24 contains a dye compound as a main component" means that the mass ratio of the dye compound content (in the case of using a plurality of dye compounds, the total thereof) to the total solid content is 50% by mass or more in the visible information recording layer 24. The mass ratio of the dye compound content to the total solid content in the visible information recording layer 24 is preferably 80% by mass or more, more preferably 90% to 100% by mass.

The thickness of the visible information recording layer 24 is preferably 0.01 to 200 µm, more preferably 0.05 to 100 µm, further preferably 0.1 to 50 µm.

The thickness ratio between the visible information recording layer 24 and the data recording layer 18 (the thickness of the visible information recording layer 24/the thickness of the data recording layer 18) is preferably 1/100 to 100/1, more preferably 1/10 to 10/1.

Desired visible information such as a character, figure, or picture is recorded on the visible information recording layer 24. The visible information may contain a disc title, an information of contents, a thumbnail of contents, a related picture, a design picture, a copyright notice, a recording date, a recording method, a recording format, etc.

The visible information recording layer 24 is not particularly limited as long as the visible information such as a character, image, or picture can be recorded. A dye, which has an absorption maximum within a wavelength range of 400 to 850 nm and has an absorbance of 0.05 or more (preferably 0.1 to 1.0) of the used laser light 38, is preferably used in the optical recording medium 10.

The visible information recording layer 24 of the optical recording medium 10 preferably contains a phthalocyanine dye represented by the following general formula (1).

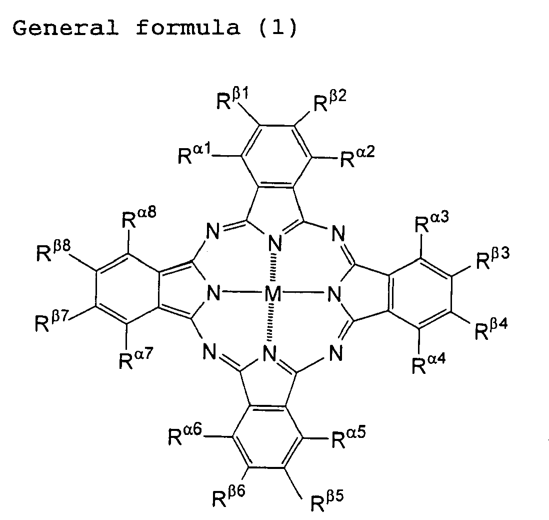

In the general formula (1), R^{α1} to R^{α8} and R^{β1} to R^{β8} independently represent a hydrogen atom or a monovalent substituent, and M represents two hydrogen atoms, a metal, a metal oxide, or a ligand-having metal.

Specifically, each of R^{α1} to R^{α8} and R^{β1} to R^{β8} in the general formula (1) may be a hydrogen atom, a halogen atom, a cyano group, a nitro group, a formyl group, a carboxyl group, a sulfo group, an alkyl group having 1 to 20 carbon atoms, an aryl group having 6 to 14 carbon atoms, an aralkyl group having 7 to 15 carbon atoms, a heterocyclic group having 1 to 10 carbon atoms, an alkoxy group having 1 to 20 carbon atoms, an aryloxy group having 6 to 14 carbon atoms, an acyl group having 2 to 21 carbon atoms, an alkylsulfonyl group having 1 to 20 carbon atoms, an arylsulfonyl group having 6 to 20 carbon atoms, a carbamoyl group having 1 to 25 carbon atoms, a sulfamoyl group having 0 to 32 carbon atoms, an alkoxycarbonyl group having 2 to 21 carbon atoms, an aryloxycarbonyl group having 7 to 15 carbon atoms, an acylamino group having 2 to 21 carbon atoms, a sulfonylamino group having 1 to 20 carbon atoms, or an amino group having 0 to 36 carbon atoms.

In the general formula (1), it is preferred that at least one of R^{α1} to R^{α8} is not a hydrogen atom, it is further preferred that at least one of four moieties, one of R^{α1} and R^{α2}, one of R^{α3} and R^{α4}, one of R^{α5} and R^{α6}, and one of R^{α7} and R^{α8}, is not a hydrogen atom. In this case, it is particularly preferred that all of R^{β1} to R^{β8} are hydrogen atoms.

In the general formula (1), each of R^{α1} to R^{α8} and R^{β1} to R^{β8} is preferably a hydrogen atom, a halogen atom, a carboxyl group, a sulfo group, an alkyl group having 1 to 16 carbon atoms, an aryl group having 6 to 10 carbon atoms, an alkoxy group having 1 to 16 carbon atoms, an aryloxy group having 6 to 10 carbon atoms, a sulfonyl group having 1 to 16 carbon atoms, a sulfamoyl group having 2 to 20 carbon atoms, an alkoxycarbonyl group having 2 to 17 carbon atoms, an aryloxycarbonyl group having 7 to 11 carbon atoms, an acylamino group having 2 to 18 carbon atoms, or a sulfonylamino group having 1 to 18 carbon atoms, more preferably a hydrogen atom, a halogen atom, a carboxyl group, a sulfo group, an alkoxy group having 1 to 16 carbon atoms, an aryloxy group having 6 to 10 carbon atoms, an alkylsulfonyl group having 1 to 14 carbon atoms, an arylsulfonyl group having 6 to 14 carbon atoms, a sulfamoyl group having 2 to 16 carbon atoms, an alkoxycarbonyl group having 2 to 13 carbon atoms, an acylamino group having 2 to 14 carbon atoms, or a sulfonylamino group having 1 to 14 carbon atoms. It is further preferred that each of R^{α1} to R^{α8} is a hydrogen atom, a halogen atom, a sulfo group, an alkoxy group having 8 to 16 carbon atoms, a sulfonyl group having 1 to 12 carbon atoms, a sulfamoyl group having 1 to 12 carbon atoms, an acylamino group having 2 to 12 carbon atoms, or a sulfonylamino group having 1 to 12 carbon atoms, and each of R^{β1} to R^{β8} is a hydrogen atom or a halogen atom. It is particularly preferred that at least one of R^{α1} to R^{α8} is a sulfo group, a sulfonyl group having 1 to 10 carbon atoms, or a sulfamoyl group having 1 to 10 carbon atoms, and R^{β1} to R^{β8} are hydrogen atoms.

In the general formula (1), R^{α1} to R^{α8} and R^{β1} to R^{β8} may have a substituent, and examples thereof include chain or cyclic alkyl groups having 1 to 20 carbon atoms, such as a methyl group, an ethyl group, an isopropyl group, and a cyclohexyl group; aryl groups having 6 to 18 carbon atoms, such as a phenyl group, a chloro phenyl group, a 2,4-di-t-amylphenyl group, and a 1-naphthyl group; aralkyl groups having 7 to 18 carbon atoms, such as a benzyl group and an anisyl group; alkenyl groups having 2 to 20 carbon atoms, such as a vinyl group and a 2-methylvinyl group; alkynyl groups having 2 to 20 carbon atoms, such as an ethynyl group, a 2-methylethynyl group, and a 2-phenylethynyl group; halogen atoms such as F, Cl, Br, and I; a cyano group; a hydroxyl group; a carboxyl group; acyl groups having 2 to 20 carbon atoms, such as an acetyl group, a benzoyl group, a salicyloyl group, and a pivaloyl group; alkoxy groups having 1 to 20 carbon atoms, such as a methoxy group, a butoxy group, and a cyclohexyloxy group; aryloxy groups having 6 to 20 carbon atoms, such as a phenoxy group, a 1-naphthoxy group, and a toluoyl group; alkylthio groups having 1 to 20 carbon atoms, such as a methylthio group, a butylthio group, a benzylthio group, and a 3-methoxypropylthio group; arylthio groups having 6 to 20 carbon atoms, such as a phenylthio group and a 4-chlorophenylthio group; alkylsulfonyl groups having 1 to 20 carbon atoms, such as a methanesulfonyl group and a butanesulfonyl group; arylsulfonyl groups having 6 to 20 carbon atoms, such as a benzenesulfonyl group and a p-toluenesulfonyl group; carbamoyl groups having 1 to 17 carbon atoms, such as an unsubstituted carbamoyl group, a methylcarbamoyl group, an ethylcarbamoyl group, a n-butylcarbamoyl group, and a dimethylcarbamoyl group; amide groups having 1 to 16 carbon atoms, such as an acetoamide group and a benzamide group; acyloxy groups having 2 to 10 carbon atoms, such as an acetoxy group and a benzoyloxy group; alkoxycarbonyl groups having 2 to 10 carbon atoms, such as a methoxycarbonyl group and an ethoxycarbonyl group; and 5- or 6-membered heterocyclic groups such as aromatic heterocyclic groups (e.g. a pyridyl group, a thienyl group, a furyl group, a thiazolyl group, an imidazolyl group, a pyrazolyl group) and heterocyclic groups (e.g. a pyrrolidine ring group, a piperidine ring group, a morpholine ring group, a pyran ring group, a thiopyran ring group, a dioxane ring group, a dithiolane ring group).

In the general formula (1), the substituent on each of R^{α1} to R^{α8} and R^{β1} to R^{β8} is preferably a chain or cyclic alkyl group having 1 to 16 carbon atoms, an aryl group having 6 to 14 carbon atoms, an aralkyl group having 7 to 15 carbon atoms, an alkoxy group having 1 to 16 carbon atoms, an aryloxy group having 6 to 14 carbon atoms, a halogen atom, an alkoxycarbonyl group having 2 to 17 carbon atoms, a carbamoyl group having 1 to 10 carbon atoms, or an amide group having 1 to 10 carbon atoms, more preferably a chain or cyclic alkyl group having 1 to 10 carbon atoms, an aralkyl group having 7 to 13 carbon atoms, an aryl group having 6 to 10 carbon atoms, an alkoxy group having 1 to 10 carbon atoms, an aryloxy group having 6 to 10 carbon atoms, a chlorine atom, an alkoxycarbonyl group having 2 to 11 carbon atoms, a carbamoyl group having 1 to 7 carbon atoms, or an amide group having 1 to 8 carbon atoms, particularly preferably a branched chain or cyclic alkyl group having 1 to 8 carbon atoms, an aralkyl group having 7 to 11 carbon atoms, an alkoxy group having 1 to 8 carbon atoms, an alkoxycarbonyl group having 3 to 9 carbon atoms, a phenyl group, or a chlorine atom, further preferably an alkoxy group having 1 to 6 carbon atoms.

In the general formula (1), M is preferably a metal, more preferably zinc, magnesium, copper, nickel, or palladium, further preferably copper or nickel, particularly preferably copper.

Specific examples of the phthalocyanine dye are illustrated below.

**Table 1. Specific Examples of Phthalocyanine Dye (Part 1)**

| No. | Position and Type of Substituent | M |
|---|---|---|
| (I-1) | R^{α1}/R^{α2}, R^{α3}/R^{α4}, R^{α5}/R^{α6}, R^{α7}/R^{α8} -SO₂N(C₅H₁₁-i)₂ | Cu |
| (I-2) | R^{α1}/R^{α2}, R^{α3}/R^{α4}, R^{α5}/R^{α6}, R^{α7}/R^{α8} -SO₂NH(2-s-buloxy-5-t-amylphenyl) | Cu |
| (I-3) | R^{α1}/R^{α2}, R^{α3}/R^{α4}, R^{α5}/R^{α6} -SO₂NH(CH₂)₃O(2,4-di-t-amylphenyl) R^{α7}/R^{α8}-SO₃H | Cu |
| (I-4) | R^{α1}/R^{α2}, R^{α3}/R^{α4}, R^{α5}/R^{α6}, R^{α7}/R^{α8} -SO₂N(3-methoxypropyl) | Ni |
| (I-5) | R^{α1}/R^{α2}, R^{α3}/R^{α4}, R^{α5}/R^{α6}, R^{α7}/R^{α8} -SO₂NMe(cyclohexyl) | Ni |
| (I-6) | R^{α1}/R^{α2}, R^{α3}/R^{α4}, R^{α5}/R^{α6}, R^{α7}/R^{α8} -SO₂N(3-i-propoxyphenyl)₂ | Ni |
| (I-7) | R^{α1}/R^{α2}, R^{α3}/R^{α4}, R^{α5}/R^{α6}, R^{α7}/R^{α8} -SO₂NH(2-i-amyloxy-carbonylphenyl) | Pd |
| (I-8) | R^{α1}/R^{α2}, R^{α3}/R^{α4}, R^{α5}/R^{α6}, R^{α7}/R^{α8} -SO₂NH(2,4,6-trimethyl-phenyl) | Pd |
| (I-9) | R^{α1}/R^{α2}, R^{α3}/R^{α4}, R^{α5}/R^{α6}, R^{α7}/R^{α8} -SO₂(4-morpholino) | Co |
| (I-10) | R^{α1}/R^{α2}, R^{α3}/R^{α4}, R^{α5}/R^{α6}, R^{α7}/R^{α8} -SO₂N(C₂H₅)(4-fluorophenyl) | Fe |
| (I-11) | R^{α1}/R^{α2}, R^{α3}/R^{α4}, R^{α5}/R^{α6} -SO₂NH(CH₂)₃N(C₂H₅)₂ | Cu |
| (I-12) | R^{α1}/R^{α2}, R^{α3}/R^{α4}, R^{α5}/R^{α6}, R^{α7}/R^{α8} -SO₂(2-n-propoxyphenyl) | Cu |
| (I-13) | R^{α1}/R^{α2}, R^{α3}/R^{α4}, R^{α5}R^{α6}, R^{α7}/R^{α8} -SO₂(2-n-butoxy-5-t-butyl-phenyl) | Ni |
| (I-14) | R^{α1}/R^{α2}, R^{α3}/R^{α4}, R^{α5}/R^{α6}, R^{α7}/R^{α8} -SO₂(2-methoxycarbonyl-phenyl) | Co |

**Table 2. Specific Examples of Phthalocyanine Dye (Part 2)**

| No. | Position and Type of Substituent | M |
|---|---|---|
| (I-15) | R^{α1}/R^{α2}, R^{α3}/R^{α4}, R^{α5}/R^{α6}, R^{α7}/R^{α8} -SO₂(CH₂)₄O(2-chloro-4-t-amylphenyl) | Cu |
| (I-16) | R^{α1}/R^{α2}, R^{α3}/R^{α4}, R^{α5}/R^{α6}, R^{α7}/R^{α8} -SO₂(CH₂)₂CO₂C₄H₉-i | Pd |
| (I-17) | R^{α1}/R^{α2}, R^{α3}/R^{α4}, R^{α5}/R^{α6}, R^{α7}/R^{α8} -SO₂(cyclohexyl) | Cu |
| (I-18) | R^{α1}/R^{α2}, R^{α3}/R^{α4}, R^{α5}/R^{α6}, R^{α7}/R^{α8} -SO₂{4-(2-s-butoxy-benzoylamino)phenyl} | Ni |
| (I-19) | R^{α1}/R^{α2}, R^{α3}/R^{α4}, R^{α5}/R^{α6} -SO₂(2,6-dichloro-4-methoxyphenyl) | Pd |
| (I-20) | R^{α1}/R^{α2}, R^{α3}/R^{α4}, R^{α5}/R^{α6} -SO₂CH(Me)CO₂CH₂-CH(C₂H₅)C₄H₉-n | Mg |
| (I-21) | R^{α1}/R^{α2}, R^{α3}/R^{α4}, R^{α5}/R^{α6}, R^{α7}/R^{α8} -SO₂{2-(2-ethoxyethoxy)-phenyl} R^{β1}/R^{β2}, R^{β3}/R^{β4}, R^{β5}/R^{β6}, R^{β7}/R^{β8} -C₂H₅ | Zn |
| (I-22) | R^{α1}/R^{α2}, R^{α3}/R^{α4}, R^{α5}/R^{α6}, R^{α7}/R^{α8} -SO₂N(CH₂CH₂OMe)₂ | Cu |
| (I-23) | R^{α1}/R^{α2}, R^{α3}/R^{α4}, R^{α5}/R^{α6}, R^{α7}/R^{α8} -OCH₂CH(C₂H₅)C₄H₉-n | Ni |
| (I-24) | R^{α1}/R^{α2}, R^{α3}/R^{α4}, R^{α5}/R^{α6}, R^{α7}/R^{α8} -OCHMe(phenyl) | Zn |
| (I-25) | R^{α1}/R^{α2}, R^{α3}/R^{α4}, R^{α5}/R^{α6}, R^{α7}/R^{α8} -OCH(s-butyl) | Cu |
| (I-26) | R^{α1}/R^{α2}, R^{α3}/R^{α4}, R^{α5}/R^{α6}, R^{α7}/R^{α8} -OCH₂CH₂OC₃H₇-i | SiCl₂ |
| (I-27) | R^{α1}/R^{α2}, R^{α3}/R^{α4}, R^{α5}/R^{α6}, R^{α7}/R^{α8} -t-amyl R^{β1}/R^{β2}, R^{β3}/R^{β4}, R^{β5}/R^{β6}, R^{β7}/R^{β8} -Cl | Ni |

**Table 3. Specific Examples of Phthalocyanine Dye (Part 3)**

| No. | Position and Type of Substituent | M |
|---|---|---|
| (I-28) | R^{α1}/R^{α2}, R^{α3}/R^{α4}, R^{α5}/R^{α6}, R^{α7}/R^{α8} -(2,6-di-ethoxyphenyl) | Zn |
| (I-29) | R^{α1}/R^{α2}, R^{α3}/R^{α4}, R^{α5}/R^{α6} -SO₂NHCH₂CH₂OC₃H₇-i R^{α7}/R^{α8} -SO₃H | Cu |
| (I-30) | R^{α1}/R^{α2}, R^{α3}/R^{α4}, R^{α5}/R^{α6} -CO₂CH₂CH₂OC₂H₅ R^{α7}/R^{α8} -CO₂H | Cu |
| (I-31) | R^{α1}/R^{α2}, R^{α3}/R^{α4}, R^{α5}/R^{α6}, R^{α7}/R^{α8} -CO₂CH(Me)CO₂C₃H₇-i | Co |
| (I-32) | R^{α1}/R^{α2}, R^{α3}/R^{α4}, R^{α5}/R^{α6}, R^{α7}/R^{α8} -CONHCH₂CH₂OC₃H₇-i | Cu |
| (I-33) | R^{α1}/R^{α2}, R^{α3}/R^{α4}, R^{α5}/R^{α6} - CON(CH₂CH₂OC₄H₉-n)₂ R^{α7}/R^{α8} -CO₂H | Pd |
| (I-34) | R^{α1}/R^{α2}, R^{α3}/R^{α4}, R^{α5}/R^{α6}, R^{α7}/R^{α8} -NHCOCH(C₂H₅)C₄H₉-n | Co |
| (I-35) | R^{α1}/R^{α2}, R^{α3}/R^{α4}, R^{α5}/R^{α6}, R^{α7}/R^{α8} -NHCO(2-n-butoxycarbonyl-phenyl) | Mg |
| (I-36) | R^{α1}/R^{α2}, R^{α3}/R^{α4}, R^{α5}/R^{α6}, R^{α7}/R^{α8} -NHSO₂(2-i-propoxyphenyl) | Pd |
| (I-37) | R^{α1}/R^{α2}, R^{α3}/R^{α4}, R^{α5}/R^{α6}, R^{α7}/R^{α8} -NHSO₂(2-n-butoxy-5-t-amyl-phenyl) | Zn |

**Table 4. Specific Examples of Phthalocyanine Dye (Part 4)**

| No. | Position and Type of Substituent | M |
|---|---|---|
| (I-38) | R^{α1}/R^{α2}, R^{α3}/R^{α4}, R^{α5}/R^{α6}, R^{α7}/R^{α8} -SO₂CH₃ | Ni |
| (I-39) | R^{α1}/R^{α2}, R^{α3}/R^{α4}, R^{α5}/R^{α6}, R^{α7}/R^{α8} -SO₂CH(CH₃)₂ | Cu |
| (I-40) | R^{α1}/R^{α2}, R^{α3}/R^{α4}, R^{α5}/R^{α6}, R^{α7}/R^{α8} -SO₂C₄H₉-s | Zn |
| (I-41) | R^{α1}/R^{α2}, R^{α3}/R^{α4}, R^{α5}/R^{α6}, R^{α7}/R^{α8} -SO₂CH₂CO₂CH(CH₃)₂ | Cu |
| (I-42) | R^{α1}/R^{α2}, R^{α3}/R^{α4}, R^{α5}/R^{α6}, R^{α7}/R^{α8} -SO₂CH(CH₃)CO₂CH₃ | Cu |
| (I-43) | R^{α1}/R^{α2}, R^{α3}/R^{α4}, R^{α5}/R^{α6}, R^{α7}/R^{α8} -SO₂C₆H₅ | Cu |
| (I-44) | R^{α1}/R^{α2}, R^{α3}/R^{α4}, R^{α5}/R^{α6}, R^{α7}/R^{α8} -SO₂N(C₅H₁₁-i)₂ | Cu |
| (I-45) | R^{α1}/R^{α2}, R^{α3}/R^{α4}, R^{α5}/R^{α6}, R^{α7}/R^{α8} -SO₂CH(CH₃)₂ | Cu |
| (I-46) | R^{α1}/R^{α2}, R^{α3}/R^{α4}, R^{α5}/R^{α6}, R^{α7}/R^{α8} -SO₂C(CH₃)₃ | Cu |
| (I-47) | R^{α1}/R^{α2}, R^{α3}/R^{α4}, R^{α5}/R^{α6}, R^{α7}/R^{α8} -SO₂C(CH₃)₂CH₂C(CH₃)₃ | Cu |
| (I-48) | R^{α1}/R^{α2}, R^{α3}/R^{α4}, R^{α5}/R^{α6}, R^{α7}/R^{α8} -SO₂C(CH₃)₂CO₂C₂H₅ | Cu |
| (I-49) | R^{α1}/R^{α2}, R^{α3}/R^{α4}, R^{α5}/R^{α6}, R^{α7}/R^{α8} -SO₂C(CH₃)₂OCH₃ | Cu |
| (I-50) | R^{α1}/R^{α2}, R^{α3}/R^{α4}, R^{α5}/R^{α6}, R^{α7}/R^{α8} -SO₂C(CH₃)₂CN | Cu |
| (I-51) | R^{α1}/R^{α2}, R^{α3}/R^{α4}, R^{α5}/R^{α6}, R^{α7}/R^{α8} -SO₂CF₂CF₂CF₃ | Cu |
| (I-52) | R^{α1}/R^{α2}, R^{α3}/R^{α4}, R^{α5}/R^{α6}, R^{α7}/R^{α8} -SO₂C(CH₃)₂CH₂CH₂CO₂Ph | Cu |
| (I-53) | R^{α1}/R^{α2}, R^{α3}/R^{α4}, R^{α5}/R^{α6}, R^{α7}/R^{α8} -SO₂C(CH₃)₂COPh | Cu |
| (I-54) | R^{α1}/R^{α2}, R^{α3}/R^{α4}, R^{α5}/R^{α6}, R^{α7}/R^{α8} -SO₂C(CH₃)₂CH₂CH₃ | Cu |
| (I-55) | R^{α1}/R^{α2}, R^{α3}/R^{α4}, R^{α5}/R^{α6}, R^{α7}/R^{α8} -SO₂C(CH₃)₃ | Pd |

**Table 5. Specific Examples of Phthalocyanine Dye (Part 5)**

| No. | Position and Type of Substituent | M |
|---|---|---|
| (I-56) | R^{α1}/R^{α2}, R^{α3}/R^{α4}, R^{α5}/R^{α6}, R^{α7}/R^{α8} -SO₂C(CH₃)₃ | SiCl₂ |
| (I-57) | R^{α1}/R^{α2}, R^{α3}/R^{α4}, R^{α5}/R^{α6}, R^{α7}/R^{α8} -SO₂C(CH₃)₂CO₂C₂H₅ | Ni |
| (I-58) | R^{β1}/R^{β2}, R^{β3}/R^{β4}, R^{β5}/R^{β6}, R^{β7}/R^{β8} -SO₂C(CH₃)₃ | Cu |
| (I-59) | R^{α1}/R^{α2}, R^{α3}/R^{α4}, R^{α5}/R^{α6}, R^{α7}/R^{α8} -SO₂C(CH₃)₃ R^{β1}/R^{β2}, R^{β3}/R^{β4}, R^{β5}/R^{β6}, R^{β7}/R^{β8} -Br | Cu |
| (I-60) | R^{α1}/R^{α2}, R^{α3}/R^{α4}, R^{α5}/R^{α6}, R^{α7}/R^{α8} R^{β1}/R^{β2}, R^{β3}/R^{β4}, R^{β5}/R^{β6}, R^{β7}/R^{β8} -SO₂C(CH₃)₃ | Cu |
| (I-61) | R^{α1}/R^{α2}, R^{α3}/R^{α4}, R^{α5}/R^{α6}, R^{α7}/R^{α8} -SO₂C(1-methylcyclohexyl) | Cu |
| (I-62) | R^{α1}/R^{α2}, R^{α3}/R^{α4}, R^{α5}/R^{α6}, R^{α7}/R^{α8} -SO₂C(CH₃)₃ | V=O |
| (I-63) | R^{α1}/R^{α2}, R^{α3}/R^{α4}, R^{α5}/R^{α6}, R^{α7}/R^{α8} -SO₂C(CH₃)₃ | Co |
| (I-64) | R^{α1}/R^{α2}, R^{α3}/R^{α4}, R^{α5}/R^{α6}, R^{α7}/R^{α8} -SO₂C(CH₃)₃ | Mg |
| (I-65) | R^{α1}/R^{α2}, R^{α3}/R^{α4}, R^{α5}/R^{α6}, R^{α7}/R^{α8} -SO₂C(CH₃)₃ | Al |

**Table 6. Specific Examples of Phthalocyanine Dye (Part 6)**

| No. | Position and Type of Substituent | M |
|---|---|---|
| (I-66) | R^{α1}/R^{α2}, R^{α3}/R^{α4}, R^{α5}/R^{α6}, R^{α7}/R^{α8} -SO₂C(CH₃)₃ | Zn |
| (I-67) | R^{α1}/R^{α2}, R^{α3}/R^{α4}, R^{α5}/R^{α6}, R^{α7}/R^{α8} -OCH(CH(CH₃)₂)₂ | Cu |
| (I-68) | R^{α1}/R^{α2}, R^{α3}/R^{α4}, R^{α5}/R^{α6}, R^{α7}/R^{α8} -OCH(CH(CH₃)₂)₂ R^{β1}/R^{β2}, R^{β3}/R^{β4}, R^{β5}/R^{β6}, R^{β7}/R^{β8} -Br | Cu |
| (I-69) | R^{α1}/R^{α2}, R^{α3}/R^{α4}, R^{α5}/R^{α6}, R^{α7}/R^{α8} -OCH(CH(CH₃)₂)₂ | Pd |
| (I-70) | R^{α1}/R^{α2}, R^{α3}/R^{α4}, R^{α5}/R^{α6} -SO₂C(CH₃)₃ R^{α7}/R^{α8} -OCH(CH(CH₃)₂)₂ | Cu |
| (I-71) | R^{α1}/R^{α2}, R^{α3}/R^{α4}, R^{α5}/R^{α6} -SO₂C(CH₃)₃ R^{α7}/R^{α8} -Br | Cu |

The phthalocyanine derivative used in this embodiment may be synthesized by a method described or quoted in Shirai and Kobayashi, "Phthalocyanine, Kagaku to Kino (Chemistry and Function)", pp. 1 to 62, Industrial Publishing & Consulting, Inc. or C. C. Leznoff and A. B. P. Lever, "Phthalocyanines, Properties and Applications", pp. 1 to 54, VCH, or a similar method.

The visible information recorded on the visible information recording layer 24 is an image that can be visually detected, and may contain any visible information such as a character (text), picture, or figure. Further, the visible information may contain a character information such as an accessible personal information, accessible period information, accessible number information, rental information, resolution information, layer information, user designation information, copyright holder information, copyright number information, manufacturer information, manufacturing date information, sale date information, vendor or seller information, set number information, regional designation information, language designation information, use designation information, user information, or use number information.

The visible information recording layer 24 may be formed by dissolving the dye compound in a solvent to prepare a coating liquid, and by applying the coating liquid. The solvent may be the same as that of the coating liquid for the data recording layer 18. Additives and application methods for the visible information recording layer 24 are the same as those for the data recording layer 18.

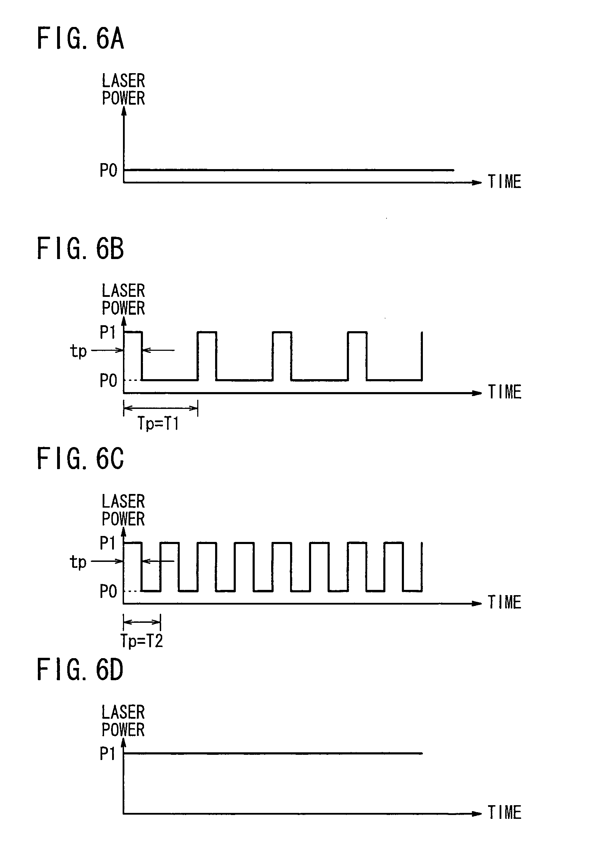

The visible information recording layer 24 has a characteristic that the refractive index of the layer can be changed in at least three stages in accordance with the properties of the applied laser light 38. The properties of the laser light 38 include a stored laser power and a laser wavelength. In the recording method of this embodiment, the stored laser power is utilized. For example, in a case where the laser light 38 is continuous as shown in FIG. 6A, the stored laser power can be obtained by (Laser power P0 × Irradiation time). Further, in a case where the laser light 38 is pulsed as shown in FIG. 6B, the stored laser power can be obtained by (Laser power DC component P0 × Irradiation time) + {(Laser power P1 × Pulse width tp - Laser power DC component P0) × (Irradiation time / Pulse period Tp)}.

Thus, the stored laser power depends on the laser power in the case of using the continuous laser light 38, and the stored laser power depends on the laser power, pulse width, and pulse period in the case of using the pulsed laser light 38.

In this embodiment, the stored laser power of the laser light 38 is controlled in each position, whereby the refractive index of each portion irradiated with the laser light 38 is changed.

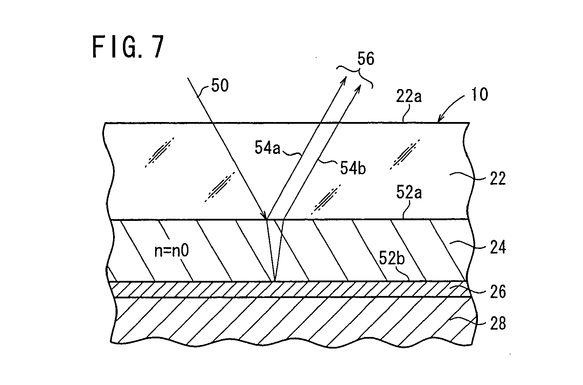

In general, when a white light 50 is applied to the label surface 22a of the optical recording medium 10 (the exposed surface 22a of the second substrate 22) as shown in FIG. 7, a first reflected light 54a from a first interface 52a between the visible information recording layer 24 and the second substrate 22 interferes with a second reflected light 54b from a second interface 52b between the visible information recording layer 24 and the second reflective layer 26, so that a interference light 56 having a particular wavelength due to constructive interference is outputted from the label surface 22a. When the visible information recording layer 24 has a constant thickness, the phase of the second reflected light 54b depends on the refractive index n of the visible information recording layer 24.

Thus, in a case where the laser light 38 is not applied to the visible information recording layer 24 or is applied only to the extent that the refractive index of the layer 24 is not changed, the interference light 56 corresponding to the initial refractive index n=n0 of the layer 24 is outputted from the label surface 22a.

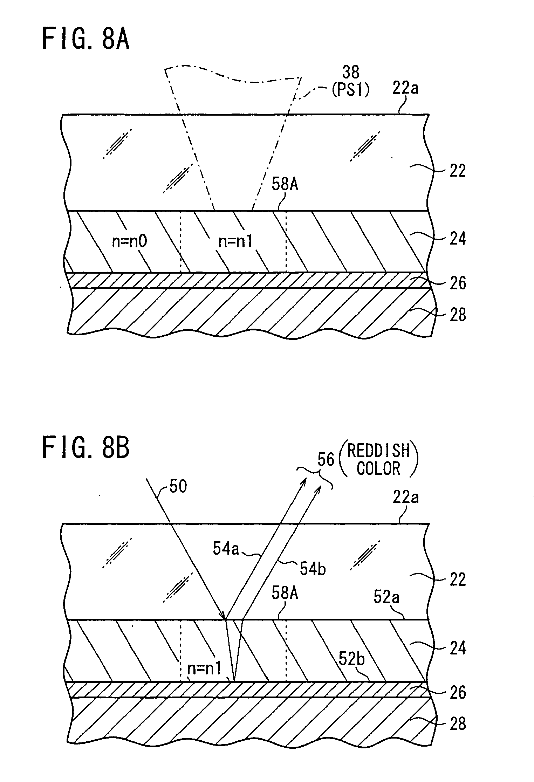

When the laser light 38 is applied to a first area 58A of the visible information recording layer 24 in an amount corresponding to a stored laser power PS1 to change the refractive index n of the first area 58A from n0 to n1 as shown in FIG. 8A, the phase of the second reflected light 54b of the incident white light 50 is changed due to the refractive index n=n1, so that also the wavelength of the interference light 56 is changed as shown in FIG. 8B. For example, in a case where the wavelength of the interference light 56 is within the red wavelength region, a reddish interference color is generated in a portion corresponding to the first area 58A on the label surface 22a.

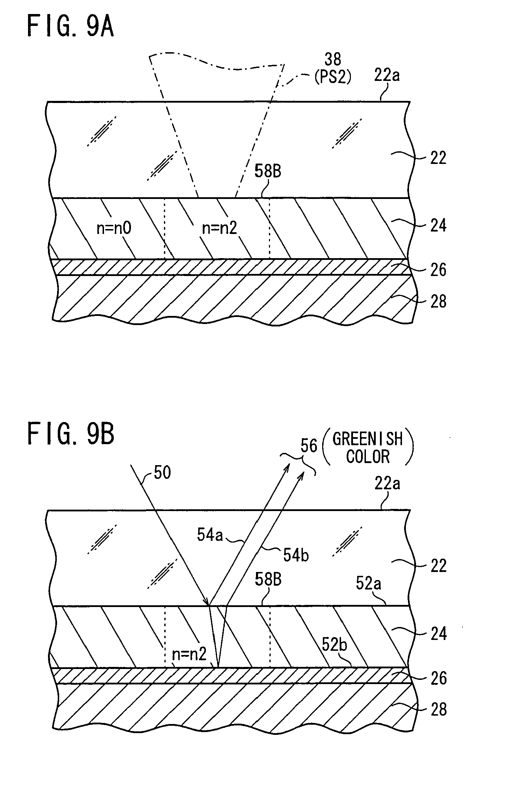

In the same manner, when the laser light 38 is applied to a second area 58B of the visible information recording layer 24 in an amount corresponding to a stored laser power PS2 to change the refractive index n of the second area 58B from n0 to n2 as shown in FIG. 9A, the phase of the second reflected light 54b of the incident white light 50 is changed due to the refractive index n=n2, so that also the wavelength of the interference light 56 is changed as shown in FIG. 9B. For example, in a case where the wavelength of the interference light 56 is within the green wavelength region, a greenish interference color is generated in a portion corresponding to the second area 58B on the label surface 22a.

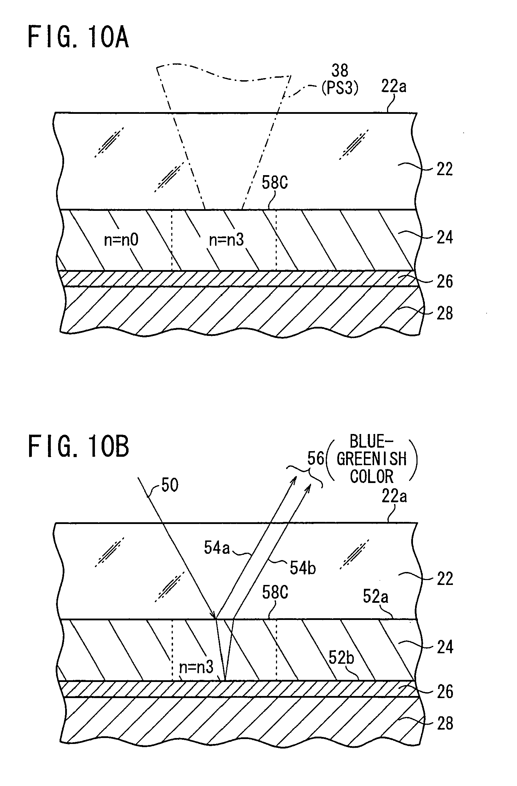

In the same manner, when the laser light 38 is applied to a third area 58C of the visible information recording layer 24 in an amount corresponding to a stored laser power PS3 to change the refractive index n of the third area 58C from n0 to n3 as shown in FIG. 10A, the phase of the second reflected light 54b of the incident white light 50 is changed due to the refractive index n=n3, so that also the wavelength of the interference light 56 is changed as shown in FIG. 10B. For example, in a case where the wavelength of the interference light 56 is within the blue-green (blue) wavelength region, a blue-greenish (bluish) interference color is generated in a portion corresponding to the third area 58C on the label surface 22a.

This demonstrates that the three primary red, green, and blue colors (multicolor) can be shown in the visible information recorded on the visible information recording layer 24 by controlling the stored laser power of the laser light 38 applied to the layer 24. Further, the visible information can be shown in full-color on the visible information recording layer 24 by controlling the combination of the three primary colors.

The refractive index n of the visible information recording layer 24 may be changed by the irradiation with the laser light 38 utilizing dye decomposition, void formation, or the combination thereof. The dye decomposition rate and the void size can be controlled by changing the irradiation energy of the laser light 38, and thus this method is effective for optionally changing the refractive index n.

### [Data recording layer 18]

The data recording layer 18 is a layer on which information can be recorded by irradiation of a laser light 38. Code information such as digital information is recorded on the data recording layer 18. The data recording layer 18 may be a WORM layer (preferably a dye WORM layer), a phase change layer, a magnetic optical layer, etc., and is preferably a recording dye layer, though not particularly restrictive.

Specific examples of dyes for the data recording dye layer 18 include cyanine dyes, oxonol dyes, metal complex dyes, azo dyes, and phthalocyanine dyes. Further, dyes described in Japanese Laid-Open Patent Publication Nos. 04-074690, 08-127174, 11-053758, 11-334204, 11-334205, 11-334206, 11-334207, 2000-043423, 2000-108513, and 2000-158818, etc. can be preferably used in the data recording layer 18.

The data recording layer 18 may be formed by the steps of dissolving a recording substance such as the dye in an appropriate solvent, optionally together with a binder, etc. to prepare a coating liquid, applying the coating liquid to the first substrate 16, and drying the applied liquid. The concentration of the recording substance in the coating liquid is generally 0.01% to 15% by mass, preferably 0.1% to 10% by mass, more preferably 0.5% to 5% by mass, most preferably 0.5% to 3% by mass.

The data recording layer 18 may be formed by vapor deposition, sputtering, CVD, or liquid coating, and is preferably formed by liquid coating. In the case of the liquid coating, the dye and a desired additive such as a quencher or a binder are dissolved in the solvent, and the resulting coating liquid is applied to the first substrate 16 and dried, to form the data recording layer 18.

The coating liquid may be applied by a spraying method, a spin coating method, a dipping method, a roll coating method, a blade coating method, a doctor roll method, a screen printing method, etc. The data recording layer 18 may have a single- or multi-layer structure. The thickness of the data recording layer 18 is generally 10 to 500 nm, preferably 15 to 300 nm, more preferably 20 to 150 nm.

An anti-fading agent may be added to the data recording layer 18 to increase the light fastness. In general, the anti-fading agent is a singlet oxygen quencher. The singlet oxygen quencher may be selected from known ones described in publications such as patent publications.

Specific examples of materials for the phase change-type data recording layer 18 include Sb-Te alloys, Ge-Sb-Te alloys, Pd-Ge-Sb-Te alloys, Nb-Ge-Sb-Te alloys, Pd-Nb-Ge-Sb-Te alloys, Pt-Ge-Sb-Te alloys, Co-Ge-Sb-Te alloys, In-Sb-Te alloys, Ag-In-Sb-Te alloys, Ag-V-In-Sb-Te alloys, and Ag-Ge-In-Sb-Te alloys.

The thickness of the phase change-type data recording layer 18 is preferably 10 to 50 nm, more preferably 15 to 30 nm. The phase change-type data recording layer 18 may be formed by a vapor-phase film deposition method such as a sputtering method or a vacuum vapor deposition method.

### [Second substrate 22]

The second substrate 22 (a protective substrate) may be composed of the same material as the first substrate 16.

### [First reflective layer 20 and second reflective layer 26]

The first reflective layer 20 may be formed on the data recording layer 18 to increase the reflectance in information reproduction. Further, the second reflective layer 26 may be formed adjacent to the visible information recording layer 24 to improve focusing of the laser light 38 for recording the visible information on the visible information recording layer 24.

The first reflective layer 20 and the second reflective layer 26 may comprise a light reflective substance having a high reflectance to the laser light 38. Examples of the light reflective substances include metals of Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, Bi, etc., metalloids, and stainless steels. These substances may be used singly or in combination, or as an alloy. For example, the first reflective layer 20 and the second reflective layer 26 can be formed on the data recording layer 18 and the visible information recording layer 24 by vapor-depositing, sputtering, or ion-plating the light reflective substance. The thickness of each of the first reflective layer 20 and the second reflective layer 26 is generally 10 to 300 nm, preferably 50 to 200 nm.

### [Adhesion layer 28]

The adhesion layer 28 is formed to improve the adhesion between the data recording part 12 and the visible information recording part 14.

The adhesion layer 28 is preferably composed of a photo curing resin. It is preferred that the photo curing resin has a small cure shrinkage ratio from the viewpoint of preventing warping of the optical recording medium 10. Examples of such light curing resins include UV curing resins (UV curing adhesives) such as SD-640 and SD-347 available from Dainippon Ink and Chemicals, Inc. The thickness of the adhesion layer 28 is preferably 1 to 1,000 µm, more preferably 5 to 500 µm, particularly preferably 10 to 100 µm, in view of flexibility.

### [Protective layer]

A protective layer may be formed to physically and chemically protect the first reflective layer 20 or the data recording layer 18, or the second reflective layer 26 or the visible information recording layer 24.

It is not always necessary to form the protective layer in the case of using the structure of the DVD-R optical recording medium, that is, bonding two substrates (one may be the first substrate 16) and two data recording layers 18 facing inward.

Examples of materials for the protective layer include inorganic substances such as ZnS, ZnS-SiO₂, SiO, SiO₂, MgF₂, SnO₂, and Si₃N₄, and organic substances such as thermoplastic resins, thermosetting resins, and UV curing resins.

In the case of using the thermoplastic or thermosetting resin, the protective layer may be formed by the steps of dissolving the resin in an appropriate solvent, applying the obtained coating liquid, and drying the applied liquid. In the case of using the UV curing resin, the protective layer may be formed by the steps of applying the resin or a coating liquid containing the resin and an appropriate solvent, and irradiating the applied resin with a UV light to harden the resin. Various additives such as antistatic agents, antioxidants, and UV absorbers may be added to these coating liquids in accordance with the purpose. The protective layer generally has a thickness of 0.1 µm to 1 mm.

As described above, the optical recording medium 10 can be used as a so-called read-only medium having a recording part (a pit), on which reproducible information is recorded by the laser light 38.

### [Visible information recording method]

In a visible information recording method according to this embodiment, visible information is recorded on the visible information recording layer 24 of the optical recording medium 10 according to this embodiment by using the laser light 38 equal to that for recording on the data recording layer 18 (see FIG. 2).

A recording apparatus, capable of recording the visible information on the visible information recording layer 24 of the optical recording medium 10 according to this embodiment, is used in the visible information recording method of this embodiment.

Two recording methods (first and second recording methods) according to this embodiment will be specifically described below.

In the first recording method, the visible information is recorded on the visible information recording layer 24 of the optical recording medium 10 according to this embodiment by using the laser light 38 equal to that for recording on the data recording layer 18.

In the second recording method, the visible information is recorded on the visible information recording layer 24 such that the laser light 38 is applied repeatedly in an approximately same trajectory pattern while oscillating the laser light 38 in the radius direction of the optical recording medium 10. Also in the second recording method, the laser light 38 for recording the visible information is preferably equal to that for recording data on the data recording layer 18 in the same manner as the first recording method.

In the first recording method, because the visible information can be recorded by using the laser light 38 equal to that for recording data on the data recording layer 18, the visible information and the data can be recorded by only using one common laser light source in the recording apparatus, so that hardware resources of the recording apparatus can be minimized and general users can easily record the visible information using the apparatus. Further, the optical recording medium 10 according to this embodiment has the visible information recording layer 24 containing the dye, and thereby is advantageous in that the recorded visible information (an image, etc.) can have high contrast and excellent visibility. It is most preferred that the visible information such as the image is recorded on the visible information recording layer 24 of the optical recording medium 10 by the first and second recording methods, though not restrictive.

In the first and second recording methods, the recording of the visible information such as the image on the visible information recording layer 24 and the recording of the data on the data recording layer 18 may be carried out by using one optical disc drive (one recording apparatus) capable of recording on both the layers. In the case of using the one optical disc drive, the recording on one of the visible information recording layer 24 and the data recording layer 18 may be carried out first, and then the optical recording medium 10 may be reversed to achieve the recording on the other layer. For example, optical disc drives described in US. Patent No. 7,082,094 and Japanese Laid-Open Patent Publication No. 2003-242750, etc. can be used for recording the visible information on the visible information recording layer 24.

The visible information may be recorded on the visible information recording layer 24 such that a laser pickup is relatively moved along the surface of the optical recording medium 10 in the recording apparatus, and the laser light 38 is modulated in accordance with an image data such as a character or picture synchronously with the relative movement, and is applied to the visible information recording layer 24. Such a system is described in US. Patent Publication No. 2002/0191517, etc.

In conventional digital data recording methods, a laser light is generally applied only once in an approximately ellipsoidal trajectory pattern. In the case of forming a pit in a recording dye layer, generally it is important to obtain a reflectance and modulation degree sufficient for recognition by an optical disc drive (a recording apparatus). Therefore, the dye in the recording dye layer has to provide the sufficient reflectance and modulation degree after applying the laser light only once.

In contrast, the above system described in US. Patent Publication No. 2002/0191517, etc. has recently been proposed as a novel image forming method. In this system, the visible information such as the image is recorded on the visible information recording layer 24 containing the dye by applying the laser light 38 repeatedly in an approximately same trajectory pattern. In the case of the conventional optical discs, the pit is formed in a particular position in the radius direction, whereby the laser light 38 is never oscillated in the radius direction of the optical recording medium 10. On the other hand, in the above system, the visible information is formed such that the laser light 38 is applied repeatedly in an approximately same trajectory pattern while oscillating the laser light 38 in the radius direction of the optical recording medium 10. The above described dyes for the method of this embodiment are suitable for the system and are capable of forming a high-contrast, clear, visible information with excellent light fastness.

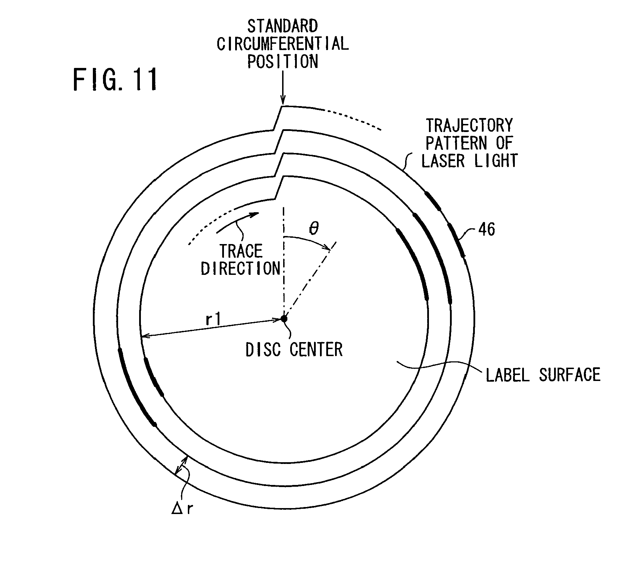

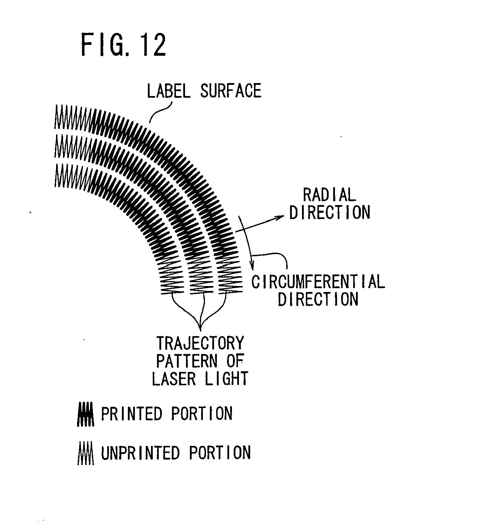

The visible information recording method will be described in detail below with reference to FIGS. 11 and 12.

A trajectory pattern of the laser light 38 for forming an image is shown in FIG. 11.

First, a laser light source is positioned at an inner portion of the optical recording medium 10 at a radius of a first image forming portion as shown in FIG. 11. Then, while detecting its circumferential position θ, at the above radius, the laser power is controlled at a predetermined high output (an output power of 1 mW or more, etc., suitable for changing the visible light properties of the visible information recording layer 24) in each circumferential image forming portion in accordance with an image data. Thus, a visible light property (e.g. the refractive index) of the visible information recording layer 24 is changed in each position irradiated with the high output laser light 38, to form an image.

In this process, a property of the laser light 38 is controlled based on color information for generating a desired color on the visible information recording layer 24. The color information is obtained by detecting information recorded in the pre-pits 32 or a BCA formed on the pre-pit region 30 of the optical recording medium 10. The color information includes the laser power, the continuous or pulsed irradiation property, the pulse width, the pulse period, or the like of the laser light 38.

The laser power of the laser light 38 is preferably 1 to 100 mW, more preferably 3 to 50 mW, further preferably 5 to 20 mW. The laser light 38 may be a semiconductor laser having an emission wavelength of 350 to 850 nm.

When the optical recording medium 10 is turned one revolution and returned to the standard circumferential position, the laser light source is moved outward by a predetermined pitch Δr using a feed motor, etc., and at the radius, the laser power is controlled at a predetermined high output in each circumferential image forming portion in accordance with an image data to form the image. The process is repeatedly carried out to form the image while moving the laser light source outward by the predetermined pitch Δr every one revolution.

The trajectory pattern of the laser light 38 on the surface of the optical recording medium 10 (the label surface 22a) in this image forming manner is shown in FIG. 11. The laser power is controlled at high output to form the image in portions 46 represented by the thick lines. FIG. 12 is an enlarged view of the trajectory pattern of the laser light 38 in the thick line portions 46. As shown in FIG. 12, the image is formed such that the laser light 38 is applied repeatedly in the approximately same trajectory pattern while oscillating the laser light 38 in the radius direction of the optical recording medium 10. The oscillation width of the laser light 38 and the number of the laser light irradiation in the pattern are set in each recording apparatus.

In the above mentioned image forming method, a radius position with no image forming portions is not scanned, and the laser light source is moved to the next radius position with an image forming portion to form the image. When the pitch Δr is too large, the image is separated by a gap even in the case of forming a continuous image. The appearance of the gap can be reduced by using a small pitch Δr. However, in this case, the laser light irradiation number for forming the image on the entire label surface is increased, thereby resulting in time-consuming image formation.

In the case of using an apparatus described in US. Patent Publication No. 2002/0191517, a tracking actuator is driven by an oscillation signal (a sine wave, a triangle wave, etc.) from an oscillation signal generating circuit, and thereby an object glass is oscillated in the disc radial direction to form an image. Thus, the laser light 38 is oscillated in the disc radial direction, and the resultant image has no gaps or smaller gaps even when the pitch Δr is relatively large. For example, the frequency of the oscillation signal may be several kHz, and the pitch Δr may be about 50 to 100 µm.

The above image forming method is described in detail in US. Patent Publication No. 2002/0191517.

In this embodiment, the three color information (reddish, greenish, and bluish colors) corresponding to the three primary colors is obtained by detecting the information recorded in the pre-pits 32 or a BCA formed on the pre-pit region 30 of the optical recording medium 10. As described above, the color information includes the laser power, the continuous or pulsed irradiation property, the pulse width, the pulse period, or the like of the laser light 38.

For example, a laser light corresponding to the reddish color information in the three color information may have a laser power P1, a pulse irradiation property, a pulse width tp, and a pulse period T1 as shown in FIG. 6B. A laser light corresponding to the greenish color information may have a laser power P1, a pulse irradiation property, a pulse width tp, and a pulse period T2 as shown in FIG. 6C. A laser light corresponding to the bluish color information may have a laser power P1 and a continuous irradiation property as shown in FIG. 6D.

For example, as shown in FIG. 8A, the pulsed laser light 38 shown in FIG. 6B may be applied to a reddish color area (the first area 58A in the visible information recording layer 24) by the above described first or second recording method, to change the refractive index n of the first area 58A from n0 to n1. In the same manner, as shown in FIG. 9A, the pulsed laser light 38 shown in FIG. 6C may be applied to a greenish color area (the second area 58B in the visible information recording layer 24), to change the refractive index n of the second area 58B to n2. In the same manner, as shown in FIG. 10A, the continuous laser light 38 shown in FIG. 6D may be applied to a bluish color area (the third area 58C in the visible information recording layer 24), to change the refractive index n of the third area 58C to n3.

On the other hand, a recording apparatus for recording the data on the data recording layer 18 has at least a laser pickup for emitting the laser light 38 and a rotating mechanism for turning the optical recording medium 10. The recording/reproducing of the data can be achieved by applying the laser light 38 from the laser pickup to the data recording layer 18 while rotating the optical recording medium 10. Such a structure of the recording apparatus has been known. The recording of the data (a pit information) on the data recording layer 18 has been known, and thus explanations therefor are omitted.

The case of using the phase change recording layer 18 will be described below. The phase change recording layer 18 contains the above described material, which can be repeatedly converted between crystal and amorphous phases by the irradiation of the laser light 38. In the data recording process, a concentrated, pulsed laser light 38 is applied in a short time to partly melt the phase change recording layer. The melted portion is rapidly cooled and solidified by heat diffusion, and thereby an amorphous recording mark is generated. Further, in the data erasing process, the recording mark is irradiated with a laser light 38 and heated to a temperature equal to or lower than the melting point and equal to or higher than the crystallization temperature of the data recording layer 18, whereby the amorphous recording mark is crystallized and returned to the initial unrecorded state.

### Example 1

The present invention is described in more detail below with reference to Example without intention of restricting the scope of the invention.

### (Production of optical recording medium 10)

A polycarbonate resin was injection-formed into a first substrate 16 having spiral pregrooves 40, a thickness of 0.6 mm, and a diameter of 120 mm.

Then, a dye represented by the following formula was dissolved in 2,2,3,3-tetrafluoro-l-propanol into a concentration of 1.5 g/100 cc, to prepare a dye coating liquid for a data recording layer 18. The coating liquid was applied by a spin coating method to the pregrooved surface of the first substrate 16, to form the data recording layer 18.

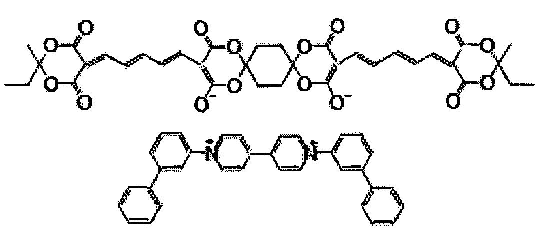

Ag (silver) was sputtered on the data recording layer 18 to form a first reflective layer 20 having a thickness of 120 nm, whereby a data recording part 12 was prepared.

Then, a polycarbonate resin was injection-formed into a second substrate 22 with a diameter of 120 mm, which had spiral pre-pits (depth 250 nm, radius direction half width 300 nm, track pitch 1.6 µm) in a region within a radius of 21 to 24 mm and had a mirror surface in a region within a radius of 24 mm or more.

The phthalocyanine dye No. I-1 shown in Table 1 and the following cyanine dye were dissolved at a ratio of 6:4 in 2,2,3,3-tetrafluoro-1-propanol into a concentration of 2.5 g/100 cc, to prepare a coating liquid for a visible information recording layer. The coating liquid was applied by a spin coating method to the second substrate, to form the visible information recording layer 24 (refractive index n=n0=1.6) having a thickness of 220 nm.

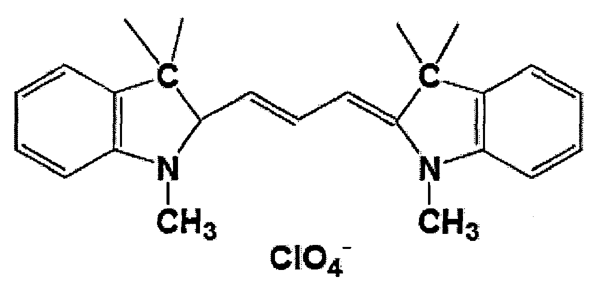

Ag (silver) was sputtered on the visible information recording layer 24 to form a second reflective layer 26 having a thickness of 80 nm, whereby a visible information recording part 14 was prepared.

Then, a UV curing adhesive (DAICURE CLEAR SD6830 available from Dainippon Ink and Chemicals, Inc.) was applied to the first reflective layer 20 of the data recording part 12, and the first reflective layer 20 was attached to the second reflective layer 26 of the visible information recording part 14. The adhesive was hardened by irradiating the visible information recording part side with a flash xenon lamp, to obtain an optical recording medium 10 containing the data recording part 12 and the visible information recording part 14 bonded.

### (Image formation on optical recording medium 10)

A laser light 38 was applied to the label surface 22a of thus produced optical recording medium 10 under the following conditions.

**Table 7**

| | |
|---|---|
| Laser light wavelength | 660 nm |
| Aperture ratio | 0. 66 |
| Laser light output | 50 mW |
| Rotation rate | 4500 rpm (at constant angular rate) |
| Image forming time | 6 minutes |
| Swing frequency | 200 Hz |
| Swing width | 50 µm |
| Overwrite | 8 times |

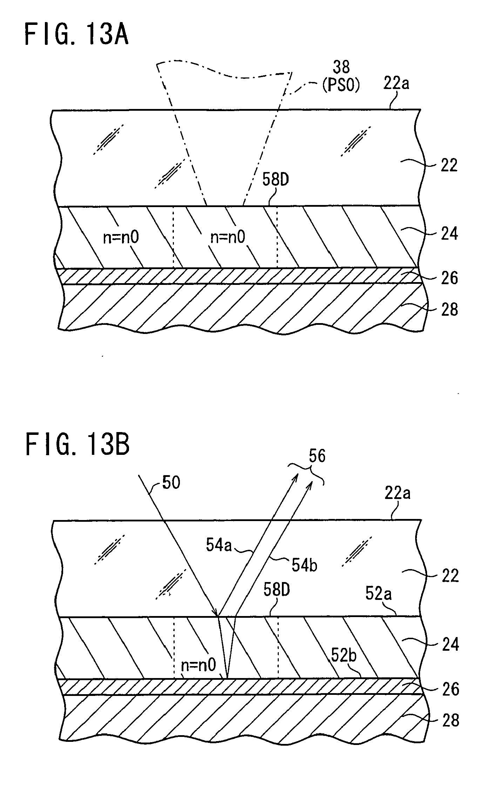

In this process, a pulsed laser light 38 was applied to a first area 58A (see FIG. 8A) of the visible information recording layer 24 as shown in FIG. 6B, a pulsed laser light 38 was applied to a second area 58B (see FIG. 9A) as shown in FIG. 6C, and a continuous laser light 38 was applied to a third area 58C (see FIG. 10A) as shown in FIG. 6D. For comparison, a continuous laser light (stored laser power PSO) was applied to a fourth area 58D (see FIG. 13A) of the visible information recording layer 24 as shown in FIG. 6A.

As a result, the first area 58A had a refractive index n1 of 1.5, the second area 58B had a refractive index n2 of 1.3, the third area 58C had a refractive index n3 of 1.1, and the fourth area 58D had a refractive index n0 of 1.6.

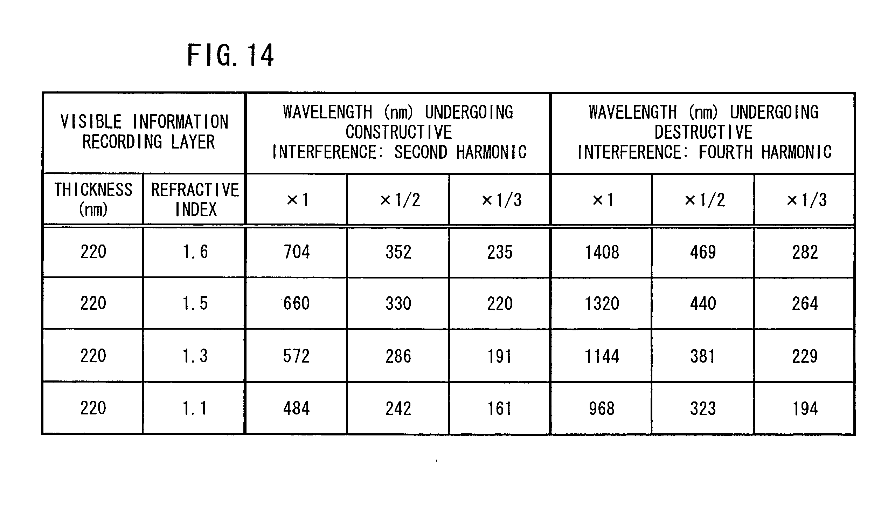

After applying the laser lights 38 in the above manner, the wavelengths of lights from the first to fourth areas 58A to 58D were obtained by a simulation. Specifically, wavelengths, which underwent constructive or destructive interference of a first reflected light 54a from a first interface 52a between the second substrate 22 and the visible information recording layer 24 and a second reflected light 54b from a second interface 52b between the visible information recording layer 24 and the second reflective layer 26, were calculated. The results are shown in FIG. 14. The second harmonic wavelength, 1/2 second harmonic wavelength, and 1/3 second harmonic wavelength of each wavelength that underwent constructive interference, and the fourth harmonic wavelength, 1/2 fourth harmonic wavelength, and 1/3 fourth harmonic wavelength of each wavelength that underwent destructive interference are shown in the table.

Lights with the wavelengths that underwent the constructive interference were recognized as interference lights. The first area 58A generated a constructive interference light with a second harmonic wavelength of 660 nm in the red region, the second area 58B generated a constructive interference light with a second harmonic wavelength of 572 nm in the green region, and the third area 58C generated a constructive interference light with a second harmonic wavelength of 484 nm in the blue-green region.

It is clear from the results that the visible information can be recorded on the visible information recording layer 24 in the three primary colors of the reddish, greenish, and bluish colors (or in multicolor) by controlling the stored laser powers of the laser lights 38 applied to the layer 24. Further, the visible information can be shown in full-color on the visible information recording layer by selecting the combination of the three primary colors.

## Claims

1. A method for recording on an optical recording medium (10) having a visible information recording layer (24), comprising irradiating said visible information recording layer (24) with a laser light (38) to change a refractive index of said visible information recording layer (24), thereby changing the wavelength of an interfering light to generate an interference color from said visible information recording layer (24), wherein
said refractive index of said visible information recording layer (24) is changed by controlling a stored laser power of said laser light (38) with which said visible information recording layer (24) is irradiated.

2. A method according to claim 1, wherein said laser light (38) is a continuous laser light, and said stored laser power of said laser light (38) is controlled by changing the laser power of said continuous laser light.

3. A method according to claim 1, wherein said laser light (38) is a pulsed laser light, and said stored laser power of said laser light (38) is controlled by changing the pulse period of said pulsed laser light.

4. A method according to claim 1, wherein said laser light (38) is a pulsed laser light, and said stored laser power of said laser light (38) is controlled by changing the pulse width of said pulsed laser light.

5. A method according to claim 1, wherein said laser light (38) is a pulsed laser light, and said stored laser power of said laser light (38) is controlled by changing the pulse width and pulse period of said pulsed laser light.

6. A method according to claim 1, wherein a reflected light (54a) from one interface (52a) of said visible information recording layer (24) interferes with a reflected light (54b) from another interface (52b) of said visible information recording layer (24) to generate said interference color.

7. A method according to claim 6, wherein said interference color contains two or more of a reddish color, a greenish color, and a bluish color.

8. A method according to claim 1, wherein said visible information recording layer (24) contains at least a phthalocyanine dye.
